# EUROPEAN PATENT SPECIFICATION

(11) **EP 3 359 944 B1**
(45) Date of publication and mention of the grant of the patent: **28.08.2019**
(21) Application number: 16834245.9
(22) Date of filing: 20.12.2016
(51) Int. Cl.: G01M 17/02

(54) **APPARATUS AND METHOD FOR CHECKING TYRES**
VORRICHTUNG UND VERFAHREN ZUR ÜBERPRÜFUNG VON REIFEN
APPAREIL ET PROCÉDÉ DE CONTRÔLE DE PNEUS

(30) Priority: 22.12.2015 IT UB20159363
(43) Date of publication of application: 15.08.2018
(73) Proprietor: Pirelli Tyre S.p.A., 20126 Milano (IT)
(72) Inventor: BOFFA, Vincenzo, 20126 Milano (IT); HELD, Alessandro, 20126 Milano (IT); REGOLI, Fabio, 20126 Milano (IT); MONTRUCCHIO, Bartolomeo, 10129 Torino (IT); BALLARDINI, Valeriano, 40026 Imola (IT); CASADIO TOZZI, Giuseppe, 40026 Imola (IT)
(74) Representative: Tirloni, Bartolomeo
(86) International application number: PCT/IB2016/057811
(87) International publication number: WO 2017/109688

(56) References cited:
- WO-A1-2014/020485
- WO-A1-2015/044196
- US-A1- 2012 134 656
- US-A1- 2013 340 515

## Description

The present invention relates to an apparatus for checking tyres, in particular suitable to be inserted in a tyre production line, in particular by the acquisition of images of the surface of a tyre and further processing thereof, for example for checking the possible presence of detectable defects on the surface of a tyre.

"Tyre" typically means the finished tyre, i.e. after the building, moulding and vulcanisation steps, but possibly also the green tyre after the building step and before the moulding and/or vulcanisation.

Typically, a tyre has a substantially toroidal structure around an axis of rotation of the same during operation, and has an axial middle line plane orthogonal to the axis of rotation, said plane typically being a geometrical substantial symmetry plane, ignoring any minor asymmetries, such as tread pattern and/or the inner structure.

A tyre for vehicle wheels generally comprises a carcass ply having respectively opposite end flaps engaged with respective annular anchoring structures, usually referred to as "bead cores", integrated in the end circular portions of the tyre, radially inner and substantially orthogonal to the rotation axis, usually identified by the name of "beads" and having an inner diameter substantially corresponding to a so-called "fitting diameter" of the tyre on a respective mounting rim. A layer of an airtight elastomeric mixture (so-called 'liner') and/or a layer of material with sealing properties may typically be provided in a position radially inner to the carcass ply. One or more belt layers, arranged in radial superposition with respect to each other and with respect to the carcass ply, having textile or metallic reinforcing cords, may be associated in a position radially outer to the carcass ply. A tread band is applied in a position radially outer to the belt layers. Respective side inserts of elastomeric material are further applied on the lateral surfaces of the carcass ply, each extending from one of the circular end edges of the tread band up at the respective annular anchoring structure to the beads.

Outer or inner surface of the tyre denote the surface which remains visible after the coupling of the tyre with the mounting rim thereof and the one no longer visible after said coupling, respectively.

Four types of tyre portions are identified herein, each portion having cylindrical symmetry about the axis of rotation and being considered for all its thickness ranging from the respective inner surface to the respective outer surface: the crown, shoulders, sidewalls and beads. Shoulder, sidewalls and beads are two by type and arranged symmetrically with respect to the median plane.

"Crown" means the single tyre portion having quasi-cylindrical shape which comprises the tread band, the belt layers and the corresponding carcass ply portion radially internal thereto.

"Sidewall" means one of the two tyre portions reciprocally facing and developing substantially radially from opposite sides of the crown up to the beads. Each sidewall therefore comprises a corresponding carcass ply portion and, in a position axially external thereto, said side insert.

"Shoulder" means each tyre portion joining the crown and the respective sidewall (in other words, the two shoulders are located at the two, radially and axially outer circular 'edges' of the tyre). Each shoulder has a circular development substantially orthogonal to the axis of rotation.

The terms 'optical', 'light' and the like refer to an electromagnetic radiation used that has at least a portion of the spectrum falling in a widened neighbourhood of the optical band, and not necessarily strictly falling within the optical band (i.e. 400 -700 nm), for example this widened neighbourhood of the optical band may range from ultraviolet to infrared (for example, a wavelength of between about 100 nm and about 1 µm).

"Telecentric illumination system' means an illumination system adapted to emit a beam of parallel light rays.

"Quasi-telecentric illumination system' means an illumination system adapted to emit a beam of light rays which form an angle that is less than or equal to 15°.

'Illumination system substantially lying in a half-space' means that at least 80%, preferably at least 90% of the overall useful light power of the illumination system comes from said half-space.

"Digital image", or equivalently "image", generally means a set of data, typically contained in a computer file, in which each tuple of coordinates (typically each pair of coordinates) of a finite set (typically two-dimensional and matrix, i.e. N rows x M columns) of tuples of spatial coordinates (each tuple corresponding to a pixel) is associated with a corresponding set of numerical values (which may be representative of different magnitudes). For example, in monochrome images (such as those in grey levels or 'greyscale'), such a set of values consists of a single value in a finite scale (typically 256 levels or tones), this value for example being representative of the luminosity (or intensity) level of the respective tuple of spatial coordinates when displayed. A further example is represented by colour images, in which the set of values represents the luminosity level of a plurality of colours or channels, typically the primary colours (for example red, green and blue in RGB coding and cyan, magenta, yellow and black in CMYK coding). The term 'image' does not necessarily imply the actual display of the same.

Any reference to a specific "digital image" (for example, the digital image initially acquired on the tyre) includes more generally any digital image obtainable through one or more digital processing of said specific digital image (such as, for example, filtering, equalization, smoothing, binarisation, thresholding, morphological transformations (opening, etc.), derivative or integral calculations, etc.).

The term "two-dimensional image" or "2D" means a digital image each pixel of which is associated to information representative of the reflectivity/diffusivity and/or colour of the surface, such as the images detected from the common cameras or digital cameras (e.g. CCD).

The term "three-dimensional image" or "3D" means a digital image each pixel of which is associated to surface height information, for example the images obtained by the altimetric profile reconstruction technique of a surface through a triangulation processing of a two-dimensional matrix image of the surface illuminated by a laser light line.

"Digital camera" or in short "camera" denotes an optoelectronic device adapted to acquire a two-dimensional digital image and including a digital image sensor (or in short 'sensor'), which defines an image plane, and an objective (which is assumed to be with cylindrical symmetry, although the invention is not limited only to these objectives).

'Sensor' means a set of photosensitive elements (called 'pixels') capable of transforming the incident light into an electric signal, for example by CCD or CMOS technology. The term pixel is used to denote both the single photosensitive element of the sensor, and by extension the single element forming the digital image as defined above, each pixel of the sensor typically corresponding to a pixel of the image.

"Optical axis" of an objective or an optical lens or an optical lens system is the straight line along which there is a symmetry of rotation of the objective or optical lens system. The adjective 'axial' means along the direction of the optical axis.

"Focal plane" of a camera means is the plane of object points that are focused by the objective on the sensor, i.e. the rays originating from each object point of the focal plane converge in a respective point on the sensor plane (image plane).

"Depth of field" means the set of planes in a neighbourhood of the focal plane each point of which, when projected by the objective on the sensor plane, forms an image inscribed in a predetermined circle of confusion (for example having a diameter of 5-10 microns).

"Matrix camera" means a camera whose sensor has the pixels arranged according to a rectangular matrix having the two dimensions of comparable length (for example, the two dimensions differ by less than one order of magnitude, as in the 4x3 or 3x2 formats). Typically, the diagonal of the sensor matrix is long some tens of millimetres.

"Linear camera" means a camera whose sensor (referred to as 'linear sensor') has the pixels arranged in a rectangular matrix having a dimension much greater than the other, typically greater by at least two orders of magnitude. Typically, the number of rows of pixels of the sensor is between 1 and 4 and the number of columns is greater than 1000. The terms 'rows' and 'columns' are conventionally used and are interchangeable. A linear camera is characterised by an objective line, lying on the intersection between the focal plane of the camera and the plane (referred to as 'optical plane') orthogonal thereto and secant (in the direction of its main dimension) the linear sensor, and is adapted to acquire images of linear surface portions arranged at the objective line (referred to as 'linear images' and having dimensions in pixels equal to the dimensions of the linear sensor).

"Resolution" refers to the linear dimension of a surface sub-portion corresponding to a pixel of the camera used for the acquisition.

"Surface linear portion" means a surface portion having a dimension size much greater than the other dimension orthogonal thereto, typically greater by at least two orders of magnitude. The minor dimension of the linear surface portion is typically less than or equal to 0.1 mm.

The term "in proximity to the objective line" means that the linear surface portion lies substantially parallel (i.e. within an angle of +/-15°) to the objective line and within the depth of field of the camera of an acquisition system.

"Laser source having a linear beam" or in short, "linear laser source" means a laser source adapted to emit a beam (referred to as 'linear beam') having a cross section in the form of line, typically shaped as a straight segment. "Propagation plane" of a linear laser source means the plane on which the linear beam propagates (said line lying on the propagation plane). "Propagation axis" refers to the direction of propagation of the linear beam. "Building/production cycle time" means the time elapsing between the outlet of a built/finished tyre from the building/production plant and the outlet of the next tyre.

In the context of the production and building processes of tyres for vehicle wheels, it is suitable to perform quality inspections on finished products, with the aim to prevent defective tyres or tyres not meeting the project specifications from being put on the market, and/or to progressively adjust the apparatuses and machinery used so as to improve and optimise the execution of the operations carried out in the production process.

These quality inspections include for example those performed by human operators who dedicate a fixed time to a visual and tactile inspection of the tyre; if, in the light of his own experience and sensitivity, the operator were to suspect that the tyre does not meet certain quality standards, the same tyre is subjected to further inspections, through a more detailed human inspection and/or suitable equipment in order to deepen the evaluation of any structural and/or qualitative deficiencies.

WO 2015/044196 A1 describes a device for the acquisition of images of the inner surface of a tyre comprising illumination means, image acquisition means and a reflector optically interposed between the illumination means and the illuminated area of the tyre surface.

WO2014/020485 describes a method and an apparatus for detecting defects comprising a twisted cord emerging on a surface of a tyre.

US 2012/134656 A1 and US 2013/340515 A1 disclose known apparatus for checking tyres.

In the field of tyre quality control, the Applicant has set itself the problem of analysing the inner and/or outer surface of the tyre by the optical acquisition of digital images thereof and subsequent processing thereof, for example in order to detect the possible presence of defects on, or in the vicinity of, the surface. The defects sought may for example be irregularities on the surface of a tyre (unvulcanised compound, alterations in shape, etc.) structural unevenness, cuts, presence of foreign bodies on the surface, etc.

An example of tyre defect that is particularly complex to detect is the so-called 'emerging twisted cord', which is a surface area (typically at a bottom area of the tread grooves) in which a textile or metal cord, for example at 0 degrees, "emerges" from the elastomeric material, thereby being exposed to air due to the total lack of elastomeric material on top of it or (more typically) whose presence is visible underneath the elastomeric material since the material thickness is too thin compared to the desired one. In this case, the elastomeric material on the cord has a "twisted" pattern (hence the name).

The Applicant has also observed that for the inspection to be used "in line" within a plant for the production of tyres, the inspections itself needs to be performed in a reduced time, less than or corresponding to said cycle time, and with reduced costs and/or overall dimensions.

As part of the checking of tyres through the acquisition and processing of digital images (which may be 2D and/or 3D) of the inner and/or outer tyre surface in a production line, the Applicant has realised that it is advantageous to subject the tyre to a series of acquisitions of images of different circumferential portions of the surface (for example one or more circumferential portions of inner and/or outer surfaces of the crown, shoulders, sidewalls, beads), in temporal succession.

To this end, it is advantageous to use one or, better, multiple image acquisition apparatuses that are positioned very close to the tyre surface and, due to a relative movement between tyre and apparatus (typically by rotation of the tyre about its axis, with stationary apparatus), construct the image of the entire desired circumferential surface portion, by combination of a succession of images acquired in sequence.

The plurality of apparatus needed for a complete inspection of the tyre can be distributed on more checking stations.

In order to check the inner surface, typically at least a portion of at least one of such acquisition apparatus is inserted in the inner toroidal cavity of the tyre, also at a close distance from the inner surface.

Since the inner surface is not always visible to the operators, and/or since the entire checking operation can be performed without any visual inspection by the operators, there is a risk that a tyre with highly irregular inner surface is subjected to inspection.

In this situation, there is the risk that the insertion of the corresponding apparatus/es in the inner cavity may cause a serious damage of the same, given also the relative movement speeds that are achieved, resulting in damage to the apparatus/es and/or interruption of the checking operations. The Applicant has therefore contemplated a preliminary checking operation, even at low resolution (for example, 1 mm resolution), of the spatial shape of the inner surface (preferably at least at the crown), in order to detect any macro-defects in shape and thus give or deny permission for the subsequent insertion of inner surface image acquisition apparatuses.

However, the Applicant has realised that this preliminary 3D scanning operation of the inner surface requires a dedicated apparatus, with a consequent increase of tyre checking costs arising from the provision of what is necessary for the inner surface scanning operation (e.g. space to allocate to the apparatus both for the operation and for storage in idle periods, dedicated handling system for the apparatus, checking station dedicated to the apparatus, time to be used for moving the tyre dedicated to such an apparatus, etc.).

Within the acquisition of digital images of a tyre surface for checking the same in a production line, where the digital images are acquired at least on the inner surface, the Applicant has therefore posed the problem of conducting a preliminary scanning operation of the shape of the inner surface, while maintaining the consumption of resources limited in terms of space and/or time and/or means specially dedicated to an apparatus for the preliminary scanning of the inner surface shape.

The Applicant has perceived that a suitable geometric distribution of an image acquisition system and a scanning system integrated together can allow checking the tyre using limited resources in a restricted time interval, thus solving the problems outlined above.

The Applicant has finally found that by combining on an apparatus, having a single support frame, a (2D and/or 3D) image acquisition system having a respective camera with a respective illumination system, and a laser triangulation scanning system of the spatial shape of the inner surface, arranged so that the scanning system and the illumination system lie in opposite half-spaces with respect to a plane passing through the optical axis of the camera, it is possible with the same apparatus to acquire (2D and/or 3D) images of the (inner and/or outer) surface with a dedicated acquisition system, and (typically at a different time) detect the three-dimensional shape of the inner surface (at least the crown) of the tyre, since the presence of the image acquisition system does not interfere with the operations of the scanning system, and vice versa, with consequent simplification of the tyre checking system.

With the present solution, for example, the same movement system (e.g. a robot arm) can move both systems and the space to be allocated to the two systems is reduced.

According to a first aspect thereof, the invention relates to an apparatus for checking tyres according to claim 1.

According to a second aspect thereof, the invention relates to a station for checking tyres in a tyre production line according to claim 11.

According to a further aspect thereof, the invention relates to a method for checking tyres according to claim 12.

The Applicant believes that an acquisition system having the above illumination system is ideal to be coupled on a single apparatus with the scanning system as provided above, without there being any harmful interference (in terms of space and/or features) between the two systems, which can operate simultaneously or, typically, at different times, on the same tyre, each with full functionality.

Moreover, the apparatus as a whole has such dimensions and weight as to easily allow the movement thereof in space by a movement system (e.g. a robot arm).

The Applicant therefore believes that in this way, the use of the movement system of the single apparatus and the use of the relevant checking station are optimised without having to implement an apparatus dedicated only to the scanning system, which would require either a dedicated movement system (with relative consumption of space and economic resources) or, if it is contemplated to disassemble and reassemble multiple different apparatus on the same movement system in a sequence, the need to assemble the dedicated apparatus (with relative waste of time and space for storage during inactivity of the apparatus).

The present invention, in at least one of the above aspects thereof, may exhibit one or more of the preferred features described hereinafter. Preferably, said acquisition system is rigidly mounted on said support frame and/or said scanning system is rigidly mounted on said support frame. In this way, advantageously, the apparatus as a whole is structurally simple, reliable, compact, easy to use and cost-effective.

Preferably, said illumination system lies completely in said half-space opposite the half-space in which said scanning system completely lies. In this way, there are no parts of the illumination system arranged at least partially around the first optical axis and/or at the two sides of the objective line, and therefore a space is left free, on the opposite side to the illumination system, where the scanning system can operate. For example, it is possible to bring the scanning system close to a tyre bead, to scan at least a portion of the inner surface, without the apparatus interfering with the tyre. For example, the illumination system can remain outside the tyre axially at (for example above) the bead or the sidewall.

Preferably, said acquisition system has a high surface resolution, i.e. is adapted to acquire images, each pixel of which corresponds to a surface area having linear size smaller than or equal to 0.2 mm, more preferably smaller than or equal to 0.1 mm.

In one embodiment, said acquisition system is a three-dimensional image acquisition system of said surface.

Preferably, said camera is a matrix camera having a depth of field. Preferably, said illumination system comprises a laser source adapted to emit a linear beam having a propagation plane and a propagation axis. Preferably, said first optical axis is inclined with respect to said propagation axis. In this way, advantageously, the acquisition system acquires 3D images of the surface, typically at high resolution.

In an alternative and preferred embodiment, said acquisition system is a two-dimensional image acquisition system. Preferably, said camera is a linear camera having an optical plane and an objective line belonging to the intersection of said focal plane with said optical plane, comprising said focal point and having a predetermined length. In this way, it is possible to acquire images of extended curved surface regions of the tyre (preventing the problems of focus and/or illumination uniformity), through the acquisition in succession and combination of a series of linear images obtained by gradually sliding the surface region at (or in the proximity of) the objective line. Preferably, said optical plane lies on said first reference plane. In this way, the illumination system, which is also on the optical plane, is centred with respect to the objective line (on which a linear surface portion of the tyre lies, in use). Preferably, said illumination system is a quasi-telecentric illumination system. In this way, advantageously, the surface can be illuminated with light having a predefined illumination direction and low divergence.

Preferably, said illumination system comprises a light source and an optical lens system having a second optical axis.

Preferably, said second optical axis intersects said first optical axis and/or said objective line.

More preferably, said second optical axis passes by said focal point. In this way the light beam, which has a direction of propagation along the second optical axis, illuminates at least partially the objective line or the focal point in an optimal manner.

Preferably, said second optical axis forms an acute angle with said focal plane greater than or equal to 7°, more preferably greater than or equal to 9°, and/or smaller than or equal to 20°, more preferably smaller than or equal to 15°. In this way advantageously, when in use a linear surface portion lies on or in proximity to the objective line, the projected light is very close to the surface line framed by the camera, since it forms an acute angle therewith that is between 7° and 20°, thus enhancing in the acquired image the shadows at reliefs and depressions on the surface.

Preferably, said second optical axis forms an acute angle with said optical plane smaller than or equal to 15° in absolute value, more preferably it lies on said optical plane. Advantageously, the projected light is thus centred with respect to the objective line. Moreover, when the latter feature is combined with the feature of the previous paragraph, the light beam is almost parallel to the framed surface line, thus allowing reliefs on the surface to be detected that are arranged transversely to the objective line. For example, when the linear surface portion is arranged substantially axially, the twisted cords, which have a substantially circumferential pattern, are transverse to the objective line and to the direction of incidence of the light.

Preferably, said illumination system comprises said single light source, more preferably having circular emitting surface with a diameter greater than or equal to 3 mm and smaller than or equal to 10 mm.

Preferably, the light source is an LED source.

Preferably, the apparatus comprises a drive and control unit for said acquisition system and for said scanning system, (rigidly) mounted on said support frame, the drive and control unit being adapted to switch-on, and/or regulate the power of, said illumination system and to activate said camera simultaneously with the switching-on of the illumination system. In this way, the command sending time and the number of cables to be moved, both as weight and in number, are reduced; only the general power supplies and the work start and end signals depart from outside the apparatus, while all the advanced logics are generated locally, not remotely, in particular the division of the image acquisition pulses, the light emission intervals by the LEDs of the illumination system over time.

Preferably, said scanning system comprises a matrix camera having a further optical axis and a laser source adapted to emit a linear beam having a propagation plane and a propagation axis, wherein said further optical axis of the matrix camera is tilted with respect to said propagation axis.

Preferably, said propagation axis is parallel to said first optical axis of the camera of the acquisition system, more preferably said propagation plane is parallel to said optical plane of the camera of the acquisition system. In this way, advantageously, the scanning system is adapted to acquire 3D images (i.e. information about spatial shape) of at least an inner surface portion, typically the crown, in a reliable, simple and cost-effective manner while maintaining the overall system compact.

Preferably, a plane passing through said further optical axis and said propagation axis is substantially perpendicular to said first reference plane. In this way, an optimal spatial configuration of the apparatus systems is achieved, thus resulting in minimum overall dimensions and maximum functionality.

Preferably, said scanning system has a resolution higher than or equal to 0.3 mm ('low resolution') and/or lower than or equal to 2 mm. In this way, it is possible to scan an entire circumferential portion of the inner surface of the crown quickly. In fact, according to the Applicant, the scanning system must be able to discriminate the tyres for which it is allowed to introduce high resolution checking apparatus (i.e. with resolution of less than 0.3 mm) of the inner surface from those for which this operation is allowed due to a risk of collision between inner surface and apparatus because of macro-deformation of the inner surface. To this end, the Applicant has verified that the above low resolution is sufficient. Finally, low resolution can also facilitate the obtaining of the following feature.

Preferably, said matrix camera has a further depth of field having length along said further optical axis greater than or equal to 150 mm and smaller than or equal to 450 mm. In this way, it is possible to perform scanning with the scanning system outside the inner toroidal space, while being able to perform scanning for a wide range of tyre sizes, keeping the same (camera) sensor-surface distance.

Preferably, said movement member of the apparatus is a robot arm.

More preferably, said robot arm is an anthropomorphic robot arm. Even more preferably, said anthropomorphic robot arm has at least 5 axes/degrees of freedom.

Preferably, as a function of said detected spatial shape, it is provided to give or deny permission for further acquisitions of images of the internal surface by means of further image acquisition apparatuses inserted in an internal space of said tyre.

Preferably, said second circumferential region of internal surface is a circumferential portion of internal surface of a crown of said tyre.

More preferably, said second circumferential region of internal surface has a length along said axis of rotation at least equal to an overall axial length of said crown.

Preferably, said first circumferential surface region is a circumferential region of external surface, more preferably it is a circumferential region of external surface of a shoulder and/or tread of said tyre.

Preferably, said first optical axis is arranged substantially radially to the tyre. In this way, the acquisition system is able to detect twisted cord defects. Preferably, said distinct surface portions are linear surface portions.

More preferably, said linear surface portions lie, in an instant of acquisition of the relevant image, substantially perpendicular to the optical axis.

Even more preferably, said linear surface portions lie, in an instant of acquisition of the relevant image, at or in proximity to the objective line.

Further features and advantages will become more apparent from the detailed description of some exemplary but non-limiting embodiments of an apparatus and a station for checking tyres in a tyre production line, according to the present invention. Such description will be given hereinafter with reference to the accompanying figures, provided only for illustrative and, therefore, non-limiting purposes, in which:

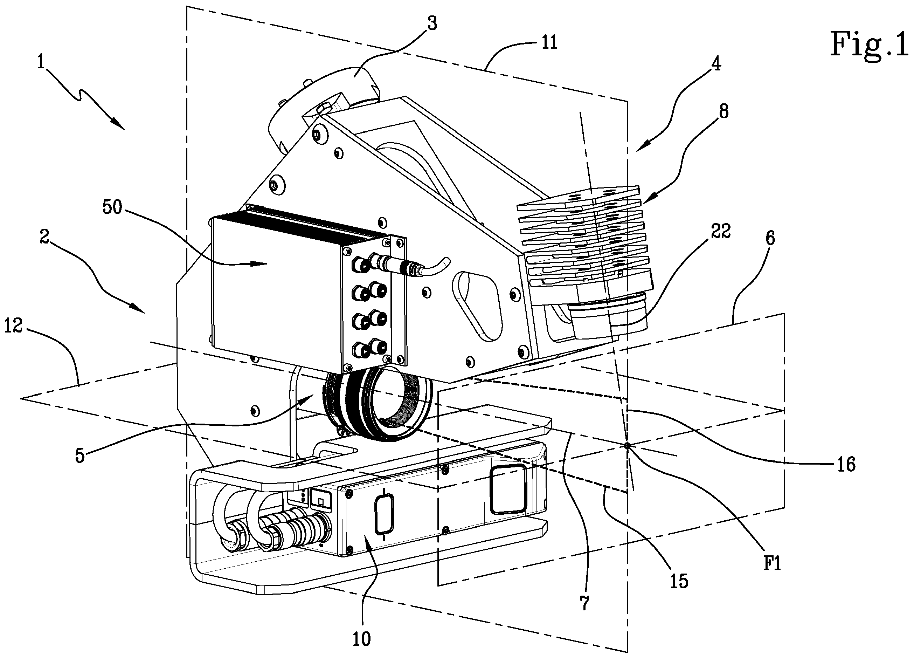

- figure 1 shows a partial and schematic perspective view of an apparatus for checking tyres according to the present invention;

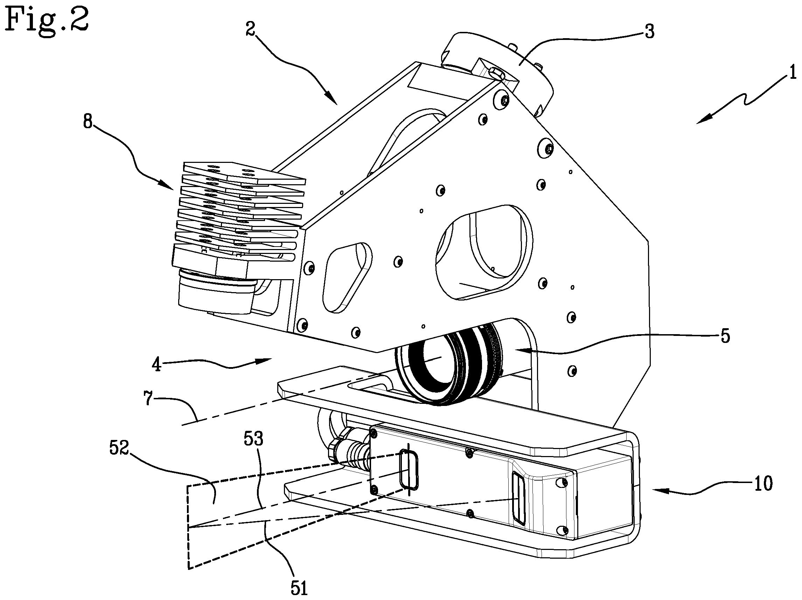

- figure 2 shows a further partial and schematic perspective view of the apparatus in figure 1 from a different view;

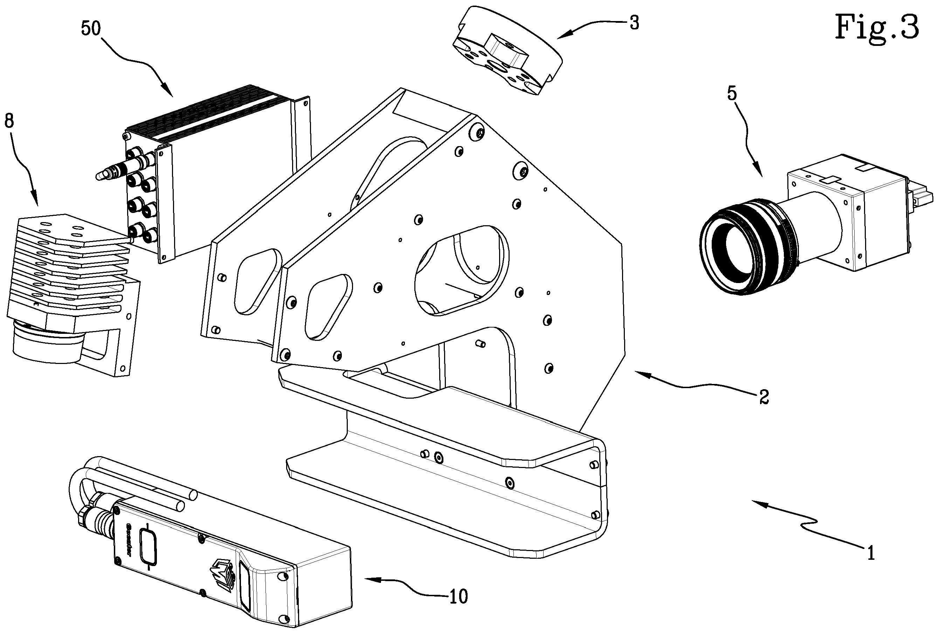

- figure 3 shows a partial and schematic, partially exploded view of the apparatus in figure 1;

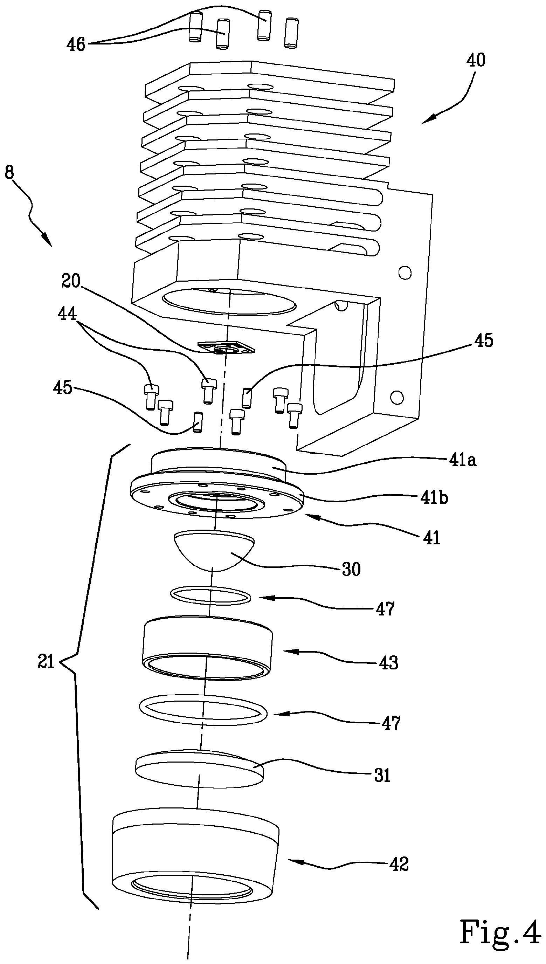

- figure 4 shows a partial and schematic, partially exploded view of a detail of the apparatus in figure 1;
- figure 5 shows a partial and schematic sectional view of the apparatus in figure 1 along a plane 11;
- figure 6 shows a detail of figure 5;
- figure 7 schematically shows a possible optical configuration of the illumination system according to the present invention;
- figure 8 shows a schematic and partial view of a station for checking tyres according to the present invention.

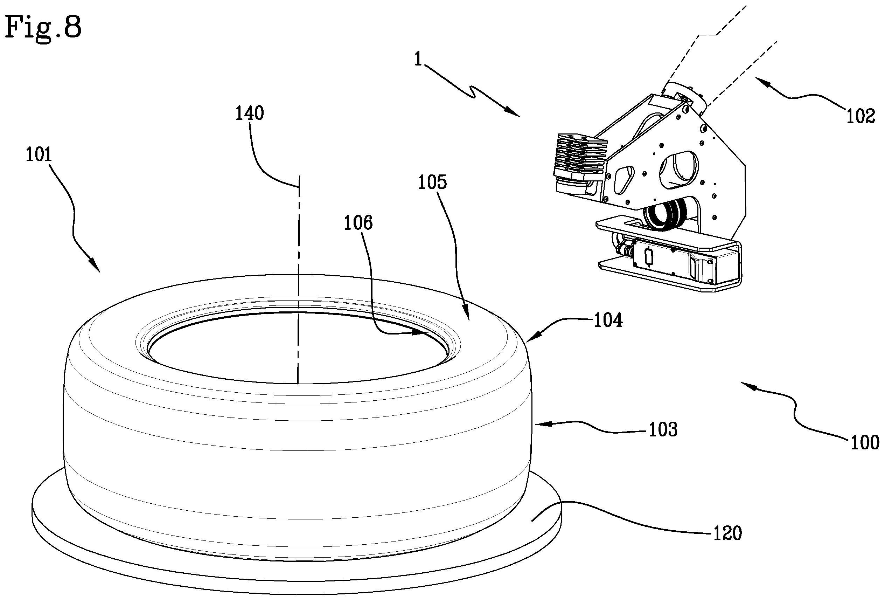

With reference to figure 8, reference numeral 100 indicates a station for checking tyres in a tyre production line.

Preferably, the station comprises a support 120 (for example a fifth wheel) adapted to support tyre 101 set on a sidewall and to rotate the tyre around a rotation axis 140 thereof (preferably arranged vertically). The tyre conventionally consists of four types of tyre portions: crown 103, shoulders 104, sidewalls 105 and beads 106.

Station 100 comprises an apparatus 1 for checking tyres.

Preferably, the station comprises a movement member 102 (only shown schematically) on which apparatus 1 is mounted for the movement thereof in space. Preferably, the movement member 102 is a robot arm, more preferably it is an anthropomorphic robot arm, even more preferably it is an anthropomorphic robot arm with at least 5 axes/degrees of freedom. It is noted that advantageously, apparatus 1 of the present invention can be inserted within the tyre from the top and not from the bottom through support 120.

Apparatus 1 comprises a support frame 2 and a flange 3 for attaching the support frame to the movement member 102.

Preferably, apparatus 1 comprises an acquisition system 4 of digital images of the tyre surface mounted, the acquisition system being rigidly mounted on the support frame 2.

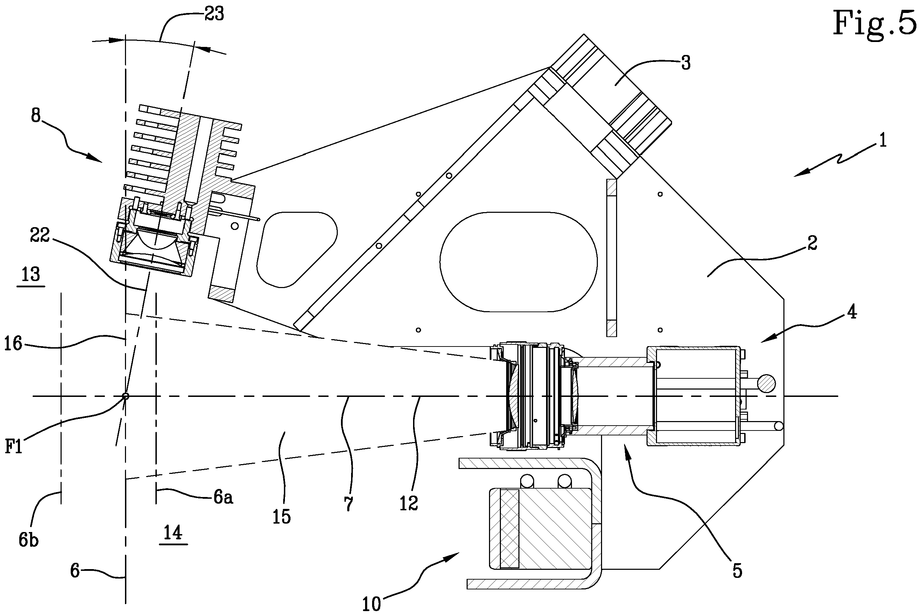

Preferably, the acquisition system 4 comprises a camera 5, having a focal plane 6 and a first optical axis 7 and an illumination system 8 adapted to illuminate at least one focal point F1 placed on the intersection of the focal plane 6 with the first optical axis 7. Figure 5 exemplarily shows traces 6a and 6b of the end planes of the depth of field of camera 5.

Preferably, the apparatus comprises a scanning system (10) rigidly mounted on the support frame and adapted to detect a spatial shape of at least one internal surface portion of the tyre.

Preferably, a first reference plane 11 passes through the first optical axis 7, the illumination system 8 and the scanning system 10.

Preferably, with respect to a second reference plane 12 orthogonal to the first reference plane and passing through the first optical axis 7, the illumination system 8 entirely lies in a half-space 13 opposite a half-space 14 in which the scanning system 10 entirely lies. See for example figure 5, which shows a schematic section taken along the first reference plane 11 and which shows the section of the second reference plane 12, coinciding with the first optical axis 7.

In one embodiment, the acquisition system may be (not shown) a high resolution three-dimensional surface image acquisition system (e.g. 0.1 mm/0.2 mm per pixel). In this case (not shown), the camera is a matrix camera and the illumination system comprises an optical axis, and a laser source adapted to emit a linear beam having a propagation plane and a propagation axis inclined with respect to the first optical axis 7.

In an alternative and preferred embodiment (as exemplarily shown in the figures), the acquisition system 4 is a high resolution two-dimensional image acquisition system. Preferably, in this case, camera 5 is a linear camera having an optical plane 15 (in the example lying on the first reference plane 11) and an objective line 16 belonging to the intersection of the focal plane 6 with the optical plane 15, comprising the focal point F1 and having a predetermined length. For example, the length of the objective line 16, which in practice corresponds to the field framed by the camera, can range from 30 mm to 200 mm.

Preferably, the illumination system 8 is a quasi-telecentric illumination system.

Preferably, the illumination system 8 comprises a light source 20 and an optical lens system 21 having a second optical axis 22.

Exemplarily, the second optical axis 22 intersects the objective line 16 in the focal point F1.

Exemplarily, the second optical axis 22 forms an acute angle 23 with the focal plane 6 equal to 11°.

Exemplarily, the second optic axis 22 lies on the optical plane 15. Preferably, the optical lens system 21 comprises a first converging lens 30 proximal to the light source and a second converging lens 31 arranged opposite the light source with respect to the first lens, where the light source, the first lens and the second lens are coaxial to the second optical axis 22. Exemplarily, the first lens and the second lens have the following features.
First lens:
   Aspherical lens
   Physical diameter (mm) 25.0
   Free aperture diameter (mm) 23.0
   Back focal length (mm) 11.2
   Numerical aperture 0.71
   Maximum thickness in the middle (mm) 10.8
   Thickness at the edge (mm) 1.0
Second lens:
   Plano-convex lens
   Physical diameter (mm) 40.0
   Free aperture diameter (mm) 39.0
   Front focal length (mm) 95.5
   Radius of the spherical convex surface (mm) 52.3
   Maximum thickness in the middle (mm) 7.0
   Thickness at the edge (mm) 3.0
   Numerical aperture 0.20

Exemplarily, the first lens is a 66-013 lens and the second lens is a 48-240 lens, both marketed by Edmund Optics Inc.

Preferably, the first and the second lens are positioned in such a way that respective convex surfaces are mutually facing.

Preferably, both lenses have antireflecting treated surfaces in order to avoid losing a part of the light output (for example, about 4% of power for each surface).

Preferably, the light source 20 is a LED source having a circular emitting surface with diameter d for example equal to 6 mm and with an optical power density exemplarily equal to 0.3 W/mm^{2.}

Exemplarily, the axial distance L1 between the light source and a back vertex VP1 of the first lens is equal to about 10.4 mm.

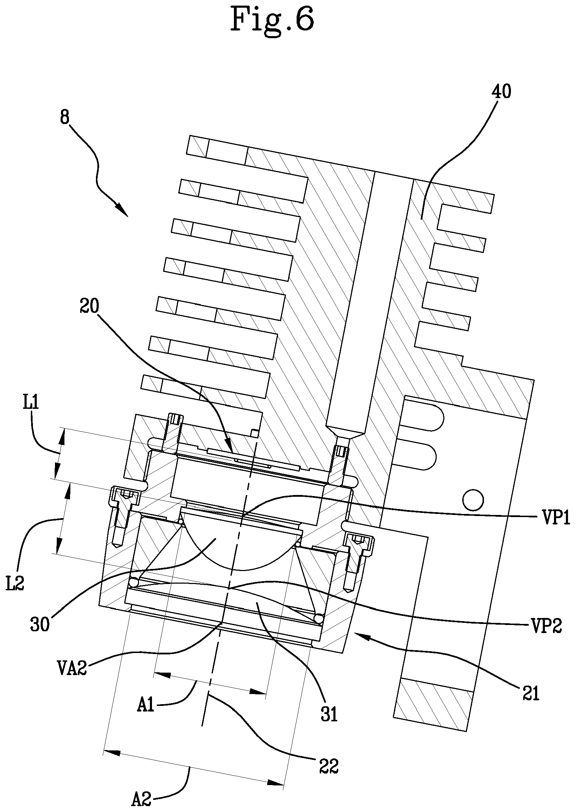

Exemplarily, the axial distance L2 between the back vertex VP1 of the first lens and the back vertex VP2 of the second lens is equal to about 14 mm (figure 6).

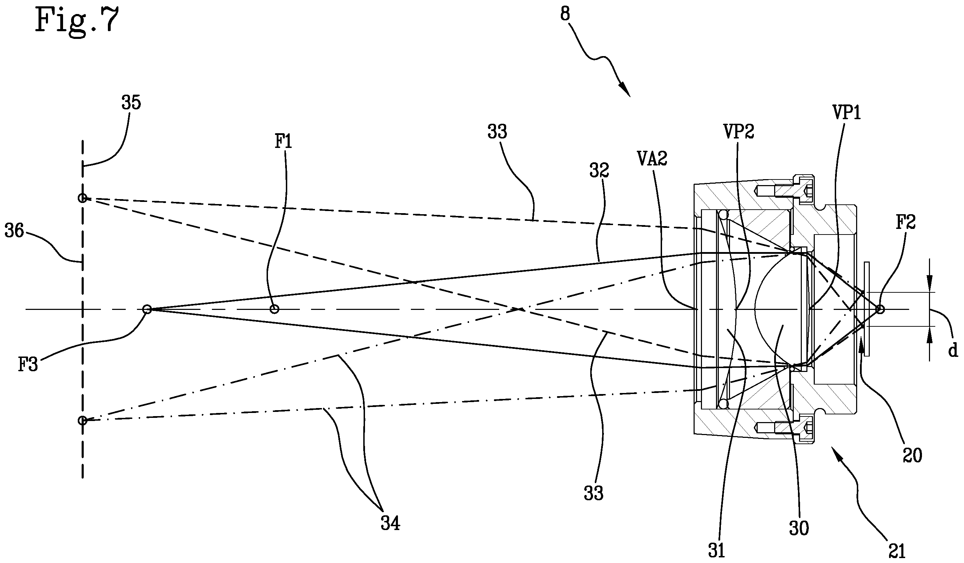

Figure 7 schematically shows, for illustrative purposes only, a possible optical configuration of the illumination system.

For the purposes of clarity, the optical refraction action of the lens is considered as if it occurs all on the back surface of the first lens and on the front one of the second lens.

F2 indicates the back focus of the first lens and F3 indicates the front focus of the second lens.

The continuous line 32 plots the two edge rays starting from a hypothetical point-like light source placed on the back focus of the first lens and which are collected by the first lens on the edge of the respective aperture. By definition, these edge rays come out from the first lens parallel to the second optical axis and are then focused by the second lens on the front focus F3 of the latter. This is what happens when (not shown) the light source, even not point-like, is located on the focal plane F2. In this case, the image plane is formed on the plane passing through F3.

In the embodiment shown by way of example, where LED 20 is positioned closer to the first lens with respect to focus F2, the rays follow a different route.

The dashed line 33 plots the two edge rays starting from a light point on the edge of the light source 20 and which are collected by the first lens on the edge of the aperture. These rays exit from the first lens and are collected and refocused by the second lens in an image plane 35 by way of example lying at an axial distance from the front vertex VA2 of the second lens greater than or equal to the front focal length of the second lens.

Similarly, the dash-dot line 34 shows edge rays diametrically opposite to the rays of the dashed lines 33.

Therefore, image 36 of the light source is formed on the image plane 35.

As can be seen, for a wide axial region around the image plane 35, the light beam has a high optical density (because almost all of the light emitted is collected) and low divergence.

For example, the F1 camera focal point may be positioned as shown in figure 7, namely at a distance from the second lens smaller than the front focal length of the second lens. In this way, at least a substantial part of the objective line is illuminated with uniform light.

The illumination system exemplarily comprises a support body 40 (suitably finned to promote the dispersion of heat generated by the LED), rigidly attached to the support frame 2.

The illumination system exemplarily comprises a first housing body 41, a second housing body 42 and an intermediate body 43 interposed between the two housing bodies 43.

The first housing body 41 comprises a first cylindrical portion 41a facing towards the light source which distances the first lens from the light source.

The outer surface of this first portion 41a is threaded and engages an internally threaded seat of the support body 40. In this way, a system for adjusting the axial distance between the light source and the first lens is achieved. After adjusting the position of the lens optical system 21 with respect to the light source 20 through the threaded coupling, suitable threaded dowels 46 which engage respective threaded holes in the support body 40 are pulled against the first housing body in order to stabilise the assembly.

The light source 20 is exemplarily fixed, for example glued, to the bottom of said internally threaded seat of the support body 40.

The housing body 41 comprises a second portion 41b that externally forms a flange and internally forms a housing seat for the first lens 30. It is noted that the minimum free cross-section of the first housing body (at the bottom of the housing seat) is the optical aperture of the first lens.

The second housing body 42, substantially cylindrical, internally comprises a housing seat for the second lens 31. Suitable screws 44 and centring dowels 45 secure the second housing body to the second flanged portion 41b of the first housing body 41.

The intermediate body 43, having a cylindrical outer surface, is housed in the housing seat of the second housing body 42, in a position interposed between the second lens 31 and the first housing body 41, in order to maintain the second lens 31 at a predetermined distance from the latter. The inner surface of the intermediate body 43 has a conical development around the second optical axis, consistent with the difference of the two lens apertures. Suitable O-rings 47 are placed between the lens and the respective housing seats.

Preferably, the apparatus comprises a drive and control unit 50 for the acquisition system 4 and for the scanning system 10 rigidly mounted on the support frame 2 for switching-on and/or regulating the power of the illumination system to activate the camera simultaneously with the switching-on of the illumination system.

Preferably, the scanning system 10 comprises (not shown) a matrix camera having a further optical axis 51 and a laser source adapted to emit a linear beam having a propagation plane 52 and a propagation axis 53, the further optical axis 51 of the matrix camera being tilted with respect to the propagation axis 53. Preferably, the propagation axis 53 is parallel to the first optical axis 7 of camera 5 of the acquisition system 4. For example, the propagation plane 52 is parallel to the optical plane 15 of the camera of the acquisition system.

Preferably, a plane (not shown) passing through the further optical axis 51 and the propagation axis 53 is perpendicular to the first reference plane 11. Exemplarily, the scanning system has a resolution equal to 0.375 mm.

In use, for example for the purpose of detecting the twisted cords emerging on the bottom of the tread grooves, it is provided to lie the tyre on a side and arrange the acquisition system so that the first optical axis 7 is substantially radial and the objective line substantially axial, and so that the focal point F1 is placed on the tread in proximity to the shoulder arranged above. The illumination system 8 is located above the tyre, with the second optical axis 22 very close (e.g. 79°) to the tread surface and coplanar with the objective line. In this way, the illumination system is able to illuminate the bottom of the tread grooves.

It is then provided to rotate the tyre with respect to the apparatus and acquire in succession, by means of the acquisition system 4, a series of images of distinct linear portions of the tyre surface that are located in succession at the objective line. For example, the linear distance between two successive linear portions is equal to 0.1 mm. By combining the series of acquired images, a complete image of a circumferential surface region of the tread is obtained. The entire upper half of the tread may possibly be acquired by repeating the above method after having axially displaced the acquisition system.

The image obtained is then subjected to processing in order to detect, for example, longitudinal cuts and/or emerging twisted cords.

Moreover, typically before or after said full circumferential region image acquisition, it is contemplated to rotate the tyre with respect to the apparatus and detect a spatial shape of at least one circumferential portion of the inner surface of the crown by means of said scanning system.

As a function of the detected spatial shape, it is provided to give or deny permission for further acquisitions of images of the internal surface by means of further high resolution image acquisition apparatuses inserted in the internal space of the tyre.

## Claims

1. Apparatus (1) for checking tyres comprising:
- a support frame (2);
- a flange (3) for attaching said support frame to a movement member for moving the apparatus;
- an acquisition system (4) for acquiring digital images of a surface of a tyre, said acquisition system being mounted on said support frame and comprising:
- a camera (5) having a focal plane (6) and a first optical axis (7), and
- an illumination system (8) adapted to illuminate at least a focal point (F1) placed on the intersection of said focal plane with said first optical axis;
**characterized in that** the apparatus comprises a scanning system (10) mounted on said support frame and adapted to detect a spatial shape of at least one internal surface portion of said tyre;
wherein a first reference plane (11) passes through said first optical axis (7), said illumination system (8) and said scanning system (10), and
wherein, with respect to a second reference plane (12) orthogonal to said first reference plane and passing through said first optical axis (7), said illumination system (8) lies in a half-space opposite to a half-space in which said scanning system (10) lies.

2. Apparatus as claimed in claim 1, wherein said acquisition system (4) is rigidly mounted on said support frame and/or said scanning system (10) is rigidly mounted on said support frame.

3. Apparatus as claimed in claim 1 or 2, wherein said illumination system (8) lies completely in said half-space opposite the half-space in which said scanning system (10) completely lies.

4. Apparatus as claimed in any one of the preceding claims, wherein said acquisition system is adapted to acquire images, each pixel of which corresponding to a surface area having linear size smaller than or equal to 0.2 mm.

5. Apparatus as claimed in any one of the preceding claims, wherein said acquisition system (4) is a two-dimensional image acquisition system, wherein said camera (5) is a linear camera having an optical plane (15) and an objective line (16) belonging to the intersection of said focal plane (6) with said optical plane, the objective line (16) comprising said focal point (F1) and having a predetermined length, and wherein said optical plane (15) lies on said first reference plane (11).

6. Apparatus as claimed in any one of the preceding claims, wherein said illumination system (8) is a quasi-telecentric illumination system, wherein said illumination system (8) comprises a light source (20) and an optical lens system (21) having a second optical axis (22), wherein said second optical axis (22) intersects said first optical axis (7) and/or said objective line (16), wherein said second optical axis (22) forms, with said optical plane (15), an acute angle that is less than or equal to 15° in absolute value, and wherein the light source is an LED source.

7. Apparatus as claimed in any one of the preceding claims, also comprising a drive and control unit (50) for said acquisition system and for said scanning system, rigidly mounted on said support frame, wherein the drive and control unit is adapted to switch-on, and/or regulate the power of, said illumination system and to activate said camera simultaneously with the switching-on of the illumination system.

8. Apparatus as claimed in any one of the preceding claims, wherein said scanning system (10) comprises a matrix camera having a further optical axis (51) and a laser source adapted to emit a linear beam having a propagation plane (52) and a propagation axis (53), wherein said further optical axis of the matrix camera is tilted with respect to said propagation axis.

9. Apparatus as claimed in claim 8, wherein a plane passing through said further optical axis (51) and said propagation axis (53) is perpendicular to said first reference plane (11), wherein said propagation axis (53) is parallel to said first optical axis (7) of the camera (5), and wherein said matrix camera has a further depth of field having length along said further optical axis (51) comprised between about 150 mm and about 450 mm.

10. Apparatus as claimed in any one of the preceding claims, wherein said scanning system (10) has a resolution greater than or equal to 0.3 mm and less than or equal to 2 mm.

11. Station (100) for checking tyres in a tyre production line, the station comprising:
- a support (120) adapted to support the tyre (101) set on a sidewall and to rotate the tyre around a rotation axis (140) thereof;
- an apparatus (1) as claimed in any one of the preceding claims, said apparatus (1) being mounted by means of said flange (3) on said movement member (102).

12. Method for checking tyres comprising:
- arranging an apparatus (1) as claimed in any one of the claims from 1 to 10;
- arranging a tyre (101) to be checked having an internal surface and an external surface and moving said apparatus close to said tyre;
- rotating said tyre with respect to said apparatus and successively acquiring, by means of said acquisition system, a series of images of distinct surface portions of the tyre in order to obtain an image of a first circumferential surface region via combination of said series of images;
- rotating said tyre with respect to said apparatus and detecting a spatial shape of a second circumferential region of said internal surface by means of said scanning system.

13. Method as claimed in claim 12, comprising, as a function of said detected spatial shape, giving or denying permission for further acquisitions of images of the internal surface by means of further image acquisition apparatuses inserted in an internal space of said tyre.

14. Method as claimed in claim 12 or 13, wherein said second circumferential internal surface region is a circumferential internal surface region of a crown of said tyre, having length along said rotation axis at least equal to an overall axial length of said crown, and/or wherein said first circumferential surface region is a circumferential external surface region of shoulder and/or of a tread of said tyre and wherein said first optical axis (7) is arranged radially with respect to the tyre.

15. Method as claimed in claim 12 or 13 or 14, wherein said distinct surface portions are linear surface portions, lying, in an acquisition instant of the relative image, perpendicular to the optical axis, at or in proximity to the objective line (16).

## Patentansprüche

1. Vorrichtung (1) zur Überprüfung von Reifen, umfassend:
- einen Tragrahmen (2);
- einen Flansch (3) zur Anbringung des Tragrahmens an einem Bewegungselement zur Bewegung der Vorrichtung;
- ein Erfassungssystem (4) zur Erfassung digitaler Bilder einer Oberfläche eines Reifens, wobei das Erfassungssystem an dem Tragrahmen montiert ist und umfasst:
- eine Kamera (5) mit einer Fokalebene (6) und einer ersten optischen Achse (7), und
- ein Beleuchtungssystem (8), das dazu geeignet ist, zumindest einen Brennpunkt (F1) zu beleuchten, der an dem Schnittpunkt der Fokalebene mit der ersten optischen Achse angeordnet ist;
**dadurch gekennzeichnet, dass** die Vorrichtung ein Abtastsystem (10) aufweist, das an dem Tragrahmen montiert und dazu geeignet ist, eine räumliche Gestalt zumindest eines inneren Oberflächenabschnitts des Reifens zu erfassen;
wobei eine erste Referenzebene (11) durch die erste optische Achse (7), das Beleuchtungssystem (8) und das Abtastsystem (10) verläuft, und wobei in Bezug auf eine zweite Referenzebene (12), die orthogonal zu der ersten Referenzebene ist und durch die erste optische Achse (7) verläuft, das Beleuchtungssystem (8) in einem Halbraum gegenüber einem Halbraum liegt, in welchem das Abtastsystem (10) liegt.

2. Vorrichtung nach Anspruch 1, wobei das Erfassungssystem (4) fest an dem Tragrahmen montiert ist und/oder das Abtastsystem (10) fest an dem Tragrahmen montiert ist.

3. Vorrichtung nach Anspruch 1 oder 2, wobei das Beleuchtungssystem (8) vollständig in dem Halbraum gegenüber dem Halbraum liegt, in welchem das Abtastsystem (10) vollständig liegt.

4. Vorrichtung nach einem der vorhergehenden Ansprüche, wobei das Erfassungssystem dazu geeignet ist, Bilder zu erfassen, wobei jedes Pixel davon einem Oberflächenbereich entspricht, der eine lineare Größe kleiner oder gleich 0,2 mm aufweist.

5. Vorrichtung nach einem der vorhergehenden Ansprüche, wobei das Erfassungssystem (4) ein zweidimensionales Bilderfassungssystem ist, wobei die Kamera (5) eine lineare Kamera ist, mit einer optischen Ebene (15) und einer Objektivlinie (16), die zu dem Schnittbereich der Fokalebene (6) mit der optischen Ebene gehört, wobei die Objektivlinie (16) den Brennpunkt (F1) umfasst und eine vorbestimmte Länge aufweist, und wobei die optische Ebene (15) auf der ersten Referenzebene (11) liegt.

6. Vorrichtung nach einem der vorhergehenden Ansprüche, wobei das Beleuchtungssystem (8) ein quasi-telezentrisches Beleuchtungssystem ist, wobei das Beleuchtungssystem (8) eine Lichtquelle (20) und ein optisches Linsensystem (21) mit einer zweiten optischen Achse (22) umfasst, wobei die zweite optische Achse (22) die erste optische Achse (7) und/oder die Objektivlinie (16) schneidet, wobei die zweite optische Achse (22) mit der optischen Ebene (15) einen spitzen Winkel bildet, der kleiner als oder gleich 15° in absoluten Werten ist, und wobei die Lichtquelle eine LED-Quelle ist.

7. Vorrichtung nach einem der vorhergehenden Ansprüche, ebenfalls umfassend eine Antriebs- und Steuereinheit (50) für das Erfassungssystem und für das Abtastsystem, die fest an dem Tragrahmen montiert ist, wobei die Antriebs- und Steuereinheit dazu geeignet ist, die Leistungszufuhr des Beleuchtungssystems einzuschalten und/oder zu regeln, und die Kamera gleichzeitig mit dem Einschalten des Beleuchtungssystems zu aktivieren.

8. Vorrichtung nach einem der vorhergehenden Ansprüche, wobei das Abtastsystem (10) eine Matrixkamera mit einer weiteren optischen Achse (51) und eine Laserquelle umfasst, die dazu geeignet ist, einen linearen Strahl mit einer Ausbreitungsebene (52) und einer Ausbreitungsachse (53) auszusenden, wobei die weitere optische Achse der Matrixkamera in Bezug auf die Ausbreitungsachse schräg ist.

9. Vorrichtung nach Anspruch 8, wobei eine Ebene, die durch die weitere optische Achse (51) und die Ausbreitungsachse (53) verläuft, senkrecht auf die erste Referenzebene (11) ist, wobei die Ausbreitungsachse (53) parallel zu der ersten optischen Achse (7) der Kamera (5) ist, und wobei die Matrixkamera eine weitere Feldtiefe mit einer Länge entlang der weiteren optischen Achse (51) zwischen etwa 150 mm und etwa 450 mm aufweist.

10. Vorrichtung nach einem der vorhergehenden Ansprüche, wobei das Abtastsystem (10) eine Auflösung größer als oder gleich 0,3 mm und kleiner als oder gleich 2 mm aufweist.

11. Station (100) zur Überprüfung von Reifen in einer Reifenproduktionslinie, wobei die Station umfasst:
- einen Träger (120), der dazu geeignet ist, den Reifen (101) zu tragen, der auf eine Seitenwand gelegt ist, und den Reifen um eine Drehachse (140) davon zu drehen;
- eine Vorrichtung (1) nach einem der vorhergehenden Ansprüche, wobei die Vorrichtung (1) mittels des Flansches (3) an dem Bewegungselement (102) montiert ist.

12. Verfahren zur Überprüfung von Reifen, umfassend:
- Anordnen einer Vorrichtung (1) nach einem der Ansprüche 1 bis 10;
- Anordnen eines zu überprüfenden Reifens (101) mit einer inneren Oberfläche und einer äußeren Oberfläche, und Bewegen der Vorrichtung nahe an den Reifen;
- Drehen des Reifens in Bezug auf die Vorrichtung und aufeinanderfolgendes Erfassen, mittels des Erfassungssystems, einer Reihe von Bildern von unterschiedlichen Oberflächenabschnitten des Reifens, um ein Bild eines ersten Umfangsflächenbereichs durch Kombination der Reihe von Bildern zu erhalten;
- Drehen des Reifens in Bezug auf die Vorrichtung und Erfassen einer räumlichen Gestalt eines zweiten umlaufenden Bereichs der inneren Oberfläche mittels des Abtastsystems.

13. Verfahren nach Anspruch 12, umfassend, als eine Funktion der erfassten räumlichen Gestalt, das Erteilen oder Verweigern der Erlaubnis für weitere Erfassungen von Bildern der inneren Oberfläche mittels weiterer Bilderfassungsvorrichtungen, die in einen Innenraum des Reifens eingebracht werden.

14. Verfahren nach Anspruch 12 oder 13, wobei der zweite umlaufende innere Oberflächenbereich ein umlaufender innerer Oberflächenbereich einer Krone des Reifens ist, mit einer Länge entlang der Drehachse zumindest gleich einer axialen Gesamtlänge der Krone, und/oder wobei der erste Umfangsflächenbereich ein umlaufender äußerer Oberflächenbereich der Schulter und/oder einer Lauffläche des Reifens ist und wobei die erste optische Achse (7) radial in Bezug auf den Reifen angeordnet ist.

15. Verfahren nach Anspruch 12 oder 13 oder 14, wobei die unterschiedlichen Oberflächenabschnitte lineare Oberflächenabschnitte sind, die im Moment der Erfassung des jeweiligen Bildes, senkrecht auf die optische Achse an oder in der Nähe der Objektivlinie (16) liegen.

## Revendications

1. Appareil (1) de contrôle de pneus comprenant :
- un cadre de support (2) ;
- une bride (3) pour fixer ledit cadre de support à un élément de déplacement pour déplacer l'appareil ;
- un système d'acquisition (4) pour acquérir des images numériques d'une surface d'un pneu, ledit système d'acquisition étant monté sur ledit cadre de support et comprenant :
- une caméra (5) ayant un plan focal (6) et un premier axe optique (7), et
- un système d'éclairage (8) adapté pour éclairer au moins un point focal (F1) placé à l'intersection dudit plan focal avec ledit premier axe optique ;
**caractérisé en ce que** l'appareil comprend un système de balayage (10) monté sur ledit cadre de support et adapté pour détecter une forme spatiale d'au moins une partie de surface interne dudit pneu ;
dans lequel un premier plan de référence (11) traverse ledit premier axe optique (7), ledit système d'éclairage (8) et ledit système de balayage (10), et
dans lequel, par rapport à un deuxième plan de référence (12) orthogonal audit premier plan de référence et traversant ledit premier axe optique (7), ledit système d'éclairage (8) se situe dans un demi-espace opposé à un demi-espace dans lequel se situe ledit système de balayage (10).

2. Appareil tel que revendiqué dans la revendication 1, dans lequel ledit système d'acquisition (4) est monté de manière rigide sur ledit cadre de support et/ou ledit système de balayage (10) est monté de manière rigide sur ledit cadre de support.

3. Appareil tel que revendiqué dans la revendication 1 ou 2, dans lequel ledit système d'éclairage (8) se situe complètement dans ledit demi-espace opposé au demi-espace dans lequel se situe complètement ledit système de balayage (10).

4. Appareil tel que revendiqué dans l'une quelconque des revendications précédentes, dans lequel ledit système d'acquisition est adapté pour acquérir des images, chaque pixel de celles-ci correspondant à une surface ayant une dimension linéaire inférieure ou égale à 0,2 mm.

5. Appareil tel que revendiqué dans l'une quelconque des revendications précédentes, dans lequel ledit système d'acquisition (4) est un système d'acquisition d'image en deux dimensions, dans lequel ladite caméra (5) est une caméra linéaire ayant un plan optique (15) et une ligne d'objectif (16) appartenant à l'intersection dudit plan focal (6) avec ledit plan optique, la ligne d'objectif (16) comprenant ledit point focal (F1) et ayant une longueur prédéterminée, et dans lequel ledit plan optique (15) se situe sur ledit premier plan de référence (11).

6. Appareil tel que revendiqué dans l'une quelconque des revendications précédentes, dans lequel ledit système d'éclairage (8) est un système d'éclairage quasi-télécentrique, dans lequel ledit système d'éclairage (8) comprend une source de lumière (20) et un système de lentilles optiques (21) ayant un deuxième axe optique (22), dans lequel ledit deuxième axe optique (22) coupe ledit premier axe optique (7) et/ou ladite ligne d'objectif (16), dans lequel ledit deuxième axe optique (22) forme, avec ledit plan optique (15), un angle aigu qui est inférieur ou égal à 15° en valeur absolue, et dans lequel la source de lumière est une source à LED.

7. Appareil tel que revendiqué dans l'une quelconque des revendications précédentes, comprenant également une unité d'entraînement et de commande (50) pour ledit système d'acquisition et pour ledit système de balayage, montée de manière rigide sur ledit cadre de support, où l'unité d'entraînement et de commande est adaptée pour mettre en marche ledit système d'éclairage et/ou réguler la puissance de celui-ci et pour activer ladite caméra simultanément avec la mise en marche du système d'éclairage.

8. Appareil tel que revendiqué dans l'une quelconque des revendications précédentes, dans lequel ledit système de balayage (10) comprend une caméra matricielle ayant un autre axe optique (51) et une source laser adaptée pour émettre un faisceau linéaire ayant un plan de propagation (52) et un axe de propagation (53), dans lequel ledit autre axe optique de la caméra matricielle est incliné par rapport audit axe de propagation.

9. Appareil tel que revendiqué dans la revendication 8, dans lequel un plan traversant ledit autre axe optique (51) et ledit axe de propagation (53) est perpendiculaire audit premier plan de référence (11), dans lequel ledit axe de propagation (53) est parallèle audit premier axe optique (7) de la caméra (5), et dans lequel ladite caméra matricielle a une profondeur de champ supplémentaire ayant une longueur le long dudit autre axe optique (51) comprise entre environ 150 mm et environ 450 mm.

10. Appareil tel que revendiqué dans l'une quelconque des revendications précédentes, dans lequel ledit système de balayage (10) a une résolution supérieure ou égale à 0,3 mm et inférieure ou égale à 2 mm.

11. Station (100) de contrôle de pneus dans une chaîne de production de pneus, la station comprenant :
- un support (120) adapté pour supporter le pneu (101) placé sur un flanc et pour faire tourner le pneu autour d'un axe de rotation (140) de celui-ci ;
- un appareil (1) tel que revendiqué dans l'une quelconque des revendications précédentes, ledit appareil (1) étant monté au moyen de ladite bride (3) sur ledit élément de déplacement (102).

12. Procédé de contrôle de pneus, comprenant le fait :
- d'agencer un appareil (1) tel que revendiqué dans l'une quelconque des revendications 1 à 10 ;
- d'agencer un pneu (101) à contrôler ayant une surface interne et une surface externe et à déplacer ledit appareil à proximité dudit pneu ;
- à faire tourner ledit pneu par rapport audit appareil et à acquérir successivement, au moyen dudit système d'acquisition, une série d'images de parties de surface distinctes du pneu afin d'obtenir une image d'une première région de surface circonférentielle par la combinaison de ladite série d'images ;
- à faire tourner ledit pneu par rapport audit appareil et à détecter une forme spatiale d'une deuxième région circonférentielle de ladite surface interne au moyen dudit système de balayage.

13. Procédé tel que revendiqué dans la revendication 12, comprenant, en fonction de ladite forme spatiale détectée, l'autorisation ou l'interdiction d'acquisitions supplémentaires d'images de la surface interne au moyen d'autres appareils d'acquisition d'images insérés dans un espace interne dudit pneu.

14. Procédé tel que revendiqué dans la revendication 12 ou 13, dans lequel ladite deuxième région de surface interne circonférentielle est une région de surface interne circonférentielle d'un sommet dudit pneu, ayant une longueur le long dudit axe de rotation au moins égale à une longueur axiale totale dudit sommet, et/ou dans lequel ladite première région de surface circonférentielle est une région de surface externe circonférentielle d'épaulement et/ou d'une bande de roulement dudit pneu et dans lequel ledit premier axe optique (7) est agencé radialement par rapport au pneu.

15. Procédé tel que revendiqué dans la revendication 12, 13 ou 14, dans lequel lesdites parties de surface distinctes sont des parties de surface linéaires, situées, à un instant d'acquisition de l'image relative, perpendiculairement à l'axe optique, au niveau ou à proximité de la ligne d'objectif (16).
